Europäisches Patentamt

European Patent Office

Office européen des brevets

(11) Publication number: 0 435 299 A1

# EUROPEAN PATENT APPLICATION

(21) Application number: 90125610.7

(22) Date of filing: 27.12.90

(51) Int. Cl.5: C01B 17/04

The title of the invention has been amended (Guidelines for Examination in the EPO, A-III, 7.3).

(30) Priority: 29.12.89 US 458864

(43) Date of publication of application:
03.07.91 Bulletin 91/27

(84) Designated Contracting States:
AT BE DE DK ES FR GB GR IT NL SE

(71) Applicant: PHILLIPS PETROLEUM COMPANY
5th and Keeler
Bartlesville Oklahoma 74004(US)

(72) Inventor: Skinner, Richard Donald
2125 Hampden Road
Bartlesville, OK 74006(US)
Inventor: Stamper, Kenneth Royce
1222 Meadow Lane
Bartlesville, OK 74006(US)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
W-8000 München 86(DE)

(54) Process for recovering sulphur from hydrogen sulphide containing gases.

(57) A process for the recovery of sulfur from a gas containing $H_2S$ is disclosed wherein the gas is reacted in the gaseous phase with $SO_2$ under suitable reaction conditions to produce sulfur and an effluent gas comprising $H_2S$, $SO_2$ and steam, wherein the molar ratio of $H_2S$ to $SO_2$ in the effluent gas is in excess of about 20:1. In accordance with the invention, the amount of $SO_2$ reacted with the acid gas is carefully controlled to insure an initial molar ratio within the reaction of $H_2S$ to $SO_2$ of about 3:1.

FIG. 1

EP 0 435 299 A1

## SULFUR RECOVERY PROCESS

### Background of the Invention

This invention relates to an improved process for recovering sulfur from a gas containing $H_2S$. In one aspect, this invention relates to an improved process for recovering sulfur from a gas containing low concentrations of $H_2S$. More particularly, this invention relates to an improved process for recovering sulfur from a gas containing $H_2S$ wherein substantially all sulfur-containing constituents are removed from the gas in an efficient, more economic manner, thereby resulting in a tail gas that is environmentally acceptable for release into the atmosphere.

Although various processes for removing sulfur from a gas containing $H_2S$ are known in the art, the primary process used commercially for the recovery of elemental sulfur from $H_2S$ is the Claus process and modifications thereof. Due primarily to high recovery efficiencies and favorable comparative economics, the Claus process has long been recognized as the premiere commercial sulfur recovery process. In the Claus process, one-third of the $H_2S$ contained within the feed gas is burned to form $SO_2$. The thus formed $SO_2$, is then reacted over a catalyst with the remaining two-thirds of the $H_2S$ contained within the feed gas to yield elemental sulfur. By repeatedly carrying out this reaction in a multiplicity of catalytic conversion zones, the Claus process is typically able to achieve recovery values within the range of about 80 percent to about 96 percent, depending upon the concentration of $H_2S$ in the feed gas. However, to achieve higher recovery values, which are desirable in view of current environmental standards, the number of catalytic conversion zones being utilized in the Claus process must be increased to an economically undesirable level. Thus, the Claus process is typically combined with at least one of various tail gas treating processes to reduce the sulfur content of the tail gas exiting the Claus process to such levels as are environmentally acceptable. Furthermore, utilization of the Claus process is undesirable when recovering sulfur from gases having $H_2S$ concentrations that are too low to support the primary combustion reaction of the Claus process. In such a case, it becomes necessary to add fluid hydrocarbons for the purpose of supporting the primary combustion reaction. Although such modified processes are known to be effective in the recovery of sulfur from an a gas containing $H_2S$, it is always desirable in view of the economics involved to make improvements upon the efficiencies and mechanisms of the primary Claus process.

### Summary of the Invention

It is thus an object of the present invention to provide an improved process for recovering sulfur from a gas containing $H_2S$. It is a further object of the present invention to provide an improved process for recovering sulfur from gases containing low concentrations of $H_2S$. It is yet a further object of the present invention to provide such processes wherein the sulfur content of the tail gas emitted from sulfur recovery units operated in the gaseous phase is reduced to environmentally acceptable levels. It is a further object of this invention to provide a process which allows operation at higher temperatures than can be used effectively in a Claus process. It is yet a further object of this invention to provide a process that does not require a combustion step to form $SO_2$.

In accordance with the present invention, a gas containing $H_2S$ is introduced into a sulfur recovery unit wherein it is reacted in the gaseous phase with $SO_2$ to produce sulfur. The amount of $SO_2$ introduced into the sulfur recovery unit is carefully controlled to insure that the initial molar ratio of $H_2S$ to $SO_2$ within the sulfur recovery unit is maintained at a level of about 3:1. In defining the initial molar ratio of $H_2S$ to $SO_2$, the $H_2S$ component is intended to include the total number of moles of reduced sulfur compounds ($H_2S$, $CS_2$, COS, $CH_3SH$, etc..) present in the feed gas. Carefully controlling the molar ratio of $H_2S$ to $SO_2$ in this manner insures, under the proper reaction conditions, that substantially all of the $SO_2$ within the sulfur recovery unit is reacted with $H_2S$ to produce sulfur. Thus, the sulfur compounds contained within the tail gas emitted from the sulfur recovery unit are primarily in the form of $H_2S$, which may be subsequently removed by contacting the tail gas with a regenerable, reduced-sulfur selective absorbent. After contacting the regenerable, reduced-sulfur selective absorbent, the tail gas is substantially free of all sulfur-containing compounds and, thus, may be released to the atmosphere in accordance with environmental standards. In accordance with the preferred embodiment of the present invention, the regenerable, reduced-sulfur absorbent, when sulfided to such a point as to be ineffective in the absorption of reduced sulfur compounds (primarily $H_2S$), is contacted with an oxygen-containing gas, thereby regenerating the absorbent material and producing a $SO_2$-containing effluent gas which is recycled to the sulfur recovery unit to provide the $SO_2$ required in the primary Claus reaction. By maintaining the molar ratio of $H_2S$ to $SO_2$ at a level of about

EP 0 435 299 A1

3:1 within the sulfur recovery unit, the amount of $SO_2$ produced through regeneration of the absorbed $H_2S$ fulfills the stochiometric requirement for $SO_2$ in the primary Claus reaction. This relationship is demonstrated by the following reactions:

1) $3 H_2S + 1 SO_2 \rightarrow 1 H_2S + 2 H_2O + 3S$

2) $1 H_2S + 1$ metal oxide $\rightarrow 1 H_2O + 1$ metal sulfide

3) $1$ metal sulfide $+ 3/2 O_2 \rightarrow 1$ metal oxide $+ 1 SO_2$

Thus, the sulfur recovery process becomes self-sustaining with regard to the $SO_2$ required for reaction with the acid gas containing $H_2S$ in the primary Claus reaction.

Other objects and advantages of the invention will be apparent from the foregoing description of the invention and the appended claims as well as from the detailed description of the invention which follows.

Brief Description of the Drawings

FIGURE 1 is a schematic illustration of a sulfur recovery unit utilizing the present invention.

FIGURE 2 is a graph of sulfur recovery efficiency vs. reaction temperature that illustrates the benefits achieved with the present invention.

Detailed Description of the Invention

In accordance with the present invention, a gas containing $H_2S$ is reacted with $SO_2$ to produce sulfur. The amount of $SO_2$ reacted with the gas containing $H_2S$ is carefully controlled to insure an initial molar ratio of $H_2S$ to $SO_2$ of about 3:1. In this regard it is noted that the molar ratio of $H_2S$ to $SO_2$ steadily increases throughout the Claus reaction due to the excess amount of $H_2S$ that is present within the reaction; thus, the term "initial molar ratio" as used herein is intended to mean the molar ratio at which the reactants are initially combined. Carefully controlling the initial molar ratio of $H_2S$ to $SO_2$ in this manner makes it possible, under the proper reaction conditions, to produce the desired sulfur while reacting substantially all of the $SO_2$ contained within the reaction gases, thereby creating an effluent gas in which substantially all of the sulfur contained therein is in the form of reduced sulfur compounds (primarily $H_2S$) which may be removed through contact with a reduced-sulfur selective absorbent. Operating the sulfur recovery process in this manner provides for the removal of substantially all of the sulfur compounds contained within the gas without the need for a two-stage secondary recovery process or a tail gas incinerator, thereby decreasing both the operating costs and the capital costs of the sulfur recovery process. Furthermore, the inventive method also makes it possible to operate in a higher temperature range while increasing the overall efficiency of the sulfur recovery process. This, in turn, permits the use of smaller catalyst beds, due to the corresponding higher reaction rates, thus further reducing the overall capital cost of the sulfur recovery process. Finally, operating the sulfur recovery process in this manner, in combination with a reduced-sulfur absorbent that can be regenerated to produce a $SO_2$-containing off gas, creates a self-sustaining process with regard to the $SO_2$ required for the primary Claus reaction, which is especially preferred when processing gases that have $H_2S$ concentrations that are too low to support the primary combustion reaction of the typical Claus process.

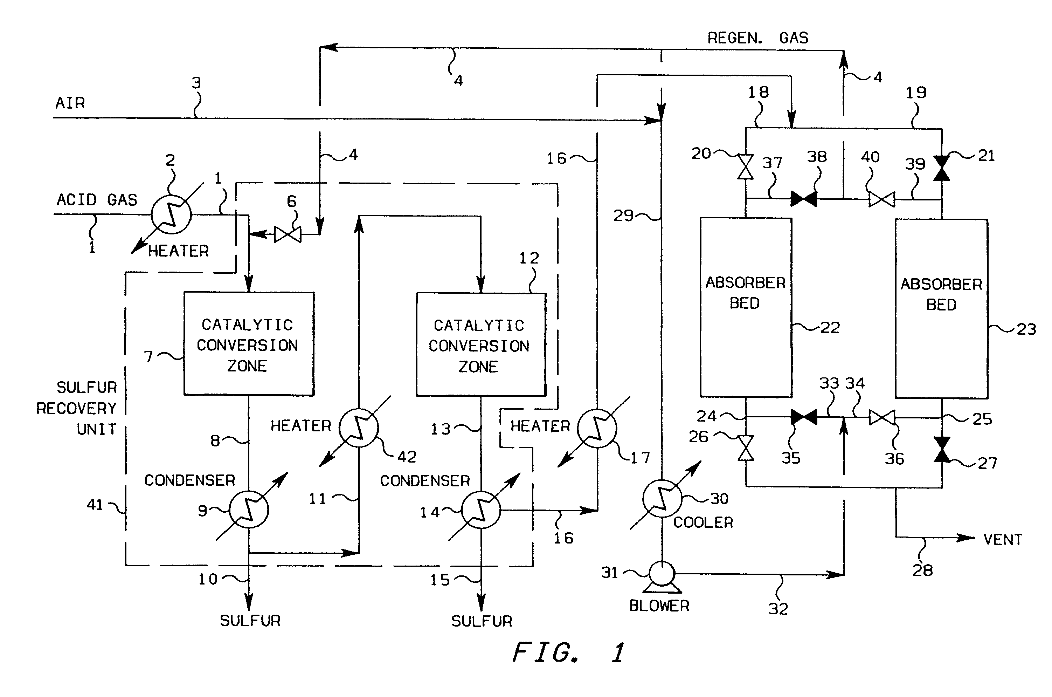

In accordance with the preferred embodiment of the present invention, as illustrated in Figure 1, an acid gas containing $H_2S$ is introduced via line 1 into a catalytic conversion zone 7 that is contained within a sulfur recovery unit 41. In the catalytic conversion zone 7, the acid gas is directly reacted in the gaseous phase with $SO_2$ to produce sulfur and water vapor. The $SO_2$ that is reacted with the acid gas is introduced into the sulfur recovery unit 41 via line 4. The amount of $SO_2$ added to the catalytic conversion zone 7 via line 4 is that amount required to insure an initial molar ratio of $H_2S$ to $SO_2$ of about 3:1 within the catalytic conversion zone 7. An initial molar ratio of about 3:1 is necessary to create the "self-sustaining" embodiment of the present invention. Thus, the actual initial molar ratio of $H_2S$ to $SO_2$ being introduced into the catalytic conversion zone 7 at any given time may range from about 2.1:1 to about 3.9:1, provided that the average of the varied initial molar ratios remains at about 3:1. The amount of $SO_2$ introduced into the catalytic conversion zone 7 is controlled via manipulation of valve 6.

In the catalytic conversion zones 7 and 12, the acid gas containing $H_2S$ is reacted with $SO_2$ under suitable reaction conditions to produce sulfur, steam, and an effluent gas stream having a molar ratio of $H_2S$ to $SO_2$ in excess of about 20:1. The catalytic conversion zones 7 and 12 may contain any high surface area materials that will, under suitable reaction conditions, catalyze the reaction between $H_2S$ and $SO_2$ to produce sulfur and water vapor. These materials are well known in the art and are commercially available. A few examples of suitable catalytic materials include titanium oxide, alumina, silica, zirconia, and combinations thereof, either alone or in combination with promoting metals such as vanadium, bismuth, and nickel.

3

EP 0 435 299 A1

Preferred catalytic materials include alumina and titanium oxide.

Any suitable reaction conditions under which $H_2S$ and $SO_2$ can be reacted to produce sulfur, steam, and the desired effluent gas stream may be used in accordance with the present invention. Generally, such reaction conditions will include a reaction temperature within the range of about 300°F to about 1200°F, preferably within the range of about 400°F to about 900°F; a reaction pressure within the range of about 0 psig to about 30 psig, preferably within the range of about 2 psig to about 15 psig; and a gas hourly space volume (GHSV; cc gas/ cc catalyst/hr) within the range of about 200 to about 10,000, preferably within the range of about 750 to about 4,000.

After being reacted in the catalytic conversion zones 7 and 12 under suitable reaction conditions, the effluent gas stream will primarily comprise $H_2S$ and $SO_2$ in a molar ratio in excess of about 20:1. When operating the inventive process under the most economically desirable reaction conditions, the molar ratio of $H_2S$ to $SO_2$ in the effluent gas stream will be in excess of 20:1, and will more preferably be in exess of 50:1. In this regard it is noted that as the $SO_2$ concentration in the effluent gas stream approaches zero, the value of this ratio approaches infinity. The amount of $SO_2$ contained within the effluent gas stream will generally be less than about 2000 ppm, and will more preferably be less than about 200 ppm. Thus, the level of $SO_2$ contained within the effluent gas stream is generally sufficiently low as to allow the $SO_2$ contained therein to be released to the atmosphere in full compliance with current environmental standards without further removal thereof being required.

Liquid sulfur from the condensers 9 and 14 that follow each of the catalytic conversion zones 7 and 12 is withdrawn from the sulfur recovery unit 41 via lines 10 and 15. The condensers 9 and 14 are generally maintained at a temperature within the range of about 250°F to about 360°F, and are preferably maintained at a temperature within the range of about 250°F to about 290°F. The effluent gas stream, primarily comprising $H_2S$ and $SO_2$ in a molar ratio in excess of 20:1, is withdrawn from the modified sulfur recovery plant 41 via line 16.

Although the present invention may be used to recover sulfur from any gas containing $H_2S$, it is generally preferable to use the present invention when recovering sulfur from a gas that has a low $H_2S$ concentration, for example below about 25 mol %, due to the inability of such a gas to support the self-sustaining combustion utilized in the primary combustion reaction of the typical Claus process. When recovering sulfur from a gas having a high $H_2S$ concentration, for example in excess of about 25 mol %, it becomes less economically attractive to use the process of the present invention due to the relative ease of using conventional burner designs to oxidize a portion of the $H_2S$ to $SO_2$.

The effluent gas stream, comprising $H_2S$ and $SO_2$ in a molar ratio in excess of about 20:1, is withdrawn from the sulfur recovery unit and passed to at least one absorber bed wherein the reduced sulfur compounds (primarily $H_2S$) contained within the effluent gas stream are absorbed, thereby producing a tailgas that may be vented to the atmosphere in full compliance with current environmental standards. In the preferred embodiment of the present invention, at least two absorber beds are utilized in order that one bed may be regenerated during the period in which the second bed is absorbing, thereby creating a continuous absorption/regeneration cycle.

The absorber bed may contain any absorbent that is capable of absorbing $H_2S$ from the effluent gas stream and that is regenerable through contact with an oxygen-containing gas in such a manner as to produce a regeneration off-gas containing $SO_2$. Examples of suitable absorbents that may be used in accordance with the present invention include solid metal absorbents such as zinc oxide, zinc titanate, zinc-vanadium pentoxide, zinc ferrite, copper oxide, copper aluminate, cupric ferrite, copper molybdate, iron oxide, and combinations thereof. Such absorbents may be supported on high-refractory solids such as alumina, silica, titania, zirconia, and combinations thereof, and may be promoted with various metals such as nickel, cobalt, iron, copper, and molybdenum. Among these absorbents, zinc oxide promoted with nickel is especially preferred.

The absorber beds may be operated at any absorption conditions under which substantially all of the $H_2S$ is being absorbed from the effluent gas stream, thereby typically producing an effluent gas stream containing less than 1 percent of the $H_2S$ contained in the absorber feed stream. Generally, the amount of reduced sulfur compounds contained in the effluent gas stream exiting the absorber beds will be less than about 200 ppm, and will preferably be less than about 100 ppm. The absorption conditions will vary depending upon the particular absorbent being utilized. Generally, however, the absorption temperature will be within the range of about 100°F to about 1200°F, and will preferably be within the range of about 200°F to about 1000°F; the absorption pressure will be within the range of about 0 psig to about 1000 psig, and will preferably be within the range of about 0.1 psig to about 100 psig; and the GHSV (gas hourly space velocity; cc gas/cc absorbent/hr) will be within the range of about 100 to about 2000, and will preferably be within the range of about 200 to about 1000.

4

When an absorber bed has become sulfided to the point that it is no longer effective in absorbing $H_2S$ from the effluent gas stream, the flow of the effluent gas stream over the absorber bed is interrupted and the absorber bed is regenerated. In the preferred embodiment of the present invention, wherein two or more absorber beds are being utilized, the flow of the effluent gas stream is switched from the sulfided absorber bed to a newly-regenerated absorber bed, and the sulfided absorber bed is subsequently regenerated. The absorber beds may be regenerated at any regeneration conditions under which the absorbent's capacity to absorb reduced sulfur compounds is restored. The regeneration conditions under which the absorbents of the present invention would be regenerated typically include a regeneration temperature within the range of about 100° F to about 1700° F, preferably within the range of about 250° F to about 1500° F; a regeneration pressure within the range of about 0 psig to about 100 psig, preferably within the range of about 0 psig to about 25 psig; and a GHSV within the range of about 100 to about 1,000, preferably within the range of about 200 to about 800.

In the preferred embodiment of the present invention, the regeneration off-gas containing $SO_2$ that is produced by regenerating a sulfided absorbent through contact with a molecular oxygen-containing gas is introduced into the sulfur recovery unit for the purpose of supplying the $SO_2$ required for the primary Claus reaction.

Returning now to the embodiment of the present invention illustrated in FIGURE 1, the effluent gas stream withdrawn from the sulfur recovery unit 41 is passed via line 16 to the absorber beds 22 or 23 wherein the reduced sulfur compounds (primarily $H_2S$) contained within the effluent gas stream are absorbed. The tail gas that is thereby produced is vented to the atmosphere via lines 24 or 25 and 28. In the illustrated embodiment, the effluent gas stream is passed via lines 16 and 18 to the absorber bed 22 through control valve 20. After the reduced sulfur compounds contained within the effluent gas have been absorbed by the absorber bed 22, the tail gas is passed via line 24 through switching valve 26 and vented to the atmosphere via line 28. Concurrently with this absorption step, the sulfided absorber bed 23 is being regenerated through contact with air and, optionally, $SO_2$ which is being passed via line 29 through a cooler 30 and a blower 31 and into the absorber bed 23 through control valve 36 via lines 32 and 34. After contacting the sulfided absorber bed 23, the regeneration gas containing $SO_2$ is withdrawn via line 39 through valve 40 and introduced via line 4 to the front of the sulfur recovery unit 41. The $SO_2$-containing regeneration off-gas is thus used to supply the $SO_2$ that is utilized in the Claus reaction for the recovery of sulfur.

The following example is presented in further illustration of the invention.

Example

The following calculated example illustrates the expected yield from a sulfur recovery process, as described herein, when the initial molar ratio of $H_2S$ to $SO_2$ is maintained at approximately 3 to 1. This calculated example is supported by related pilot plant work that was carried out at different initial molar ratios.

Experimental Apparatus

Although a number of configurations may be used, the flow sheet shown in Figure 1, as previously described herein, gives a schematic representation of an experimental apparatus that may be used to carry out the sulfur recovery process of the present invention.

For the purpose of this example, the acid gas being fed to the catalytic conversion zone will be said to have a $H_2S$ concentration of 10 volume percent. All typical trace contaminants are assumed to be present in the acid gas. While there would possibly be small amounts of hydrocarbons present in the acid gas, such amounts are not considered in the calculations of this example.

Reviewing the flow of the acid gas through the sulfur recovery unit: the acid gas 1 is flowed through a heater 2 where the temperature adjustment ranges from 300° F to 400° F. The heated acid gas stream joins the regeneration gas stream 4 just prior to entering the first catalytic conversion zone 7. The temperature of the commingled streams is maintained at an averaged temperature of about 450° F. The combined flow going through the catalytic conversion zone 7 has an average gas hourly space velocity of about 2800 cc gas/cc catalyst/hr. In the catalytic converter zone 7, the coverter bed temperature ranges from an average temperature of about 570° F at the top of the bed to about 850° F near the bottom of the bed.

The $H_2S$:$SO_2$ molar ratio of the commingled gas streams entering the first catalytic conversion zone 7 is approximately 3:1; while the ratio for the gas stream 11 exiting the bed and entering the second catalytic conversion zone 12 is approximately 9:1.

5

The stream exiting the first catalytic converion zone 7 passes through a pressurized boiling water heat exchanger 9 where the temperature of the gas is cooled to approximately 380°F. A portion of the sulfur product is condensed to liquid form 10, and is dropped into a sulfur storage chamber (not shown). Periodically, the collected sulfur is drained through a seal trap (not shown) and weighed to establish the sulfur production rate.

The gas stream 11, containing entrained sulfur (either as uncondensed sulfur or as small sulfur droplets), is passed through a heater 43, where the temperature of the stream is raised to approximately 400°F.

The temperature of the gas stream 11 in the second catalytic conversion zone 12 ranges from an average temperature of about 480°F near the top of the bed to about 500°F near the bottom of the bed. The $H_2S:SO_2$ ratio of the gas 13 exiting the second catalytic coversion zone 12 averages about 100:1.

The gas 13 exiting the second catalytic conversion zone 12 passes through a boiling water cooled condenser 14, where the temperature of the gas is reduced to approximately 275°F. The sulfur product 15 is condensed from the gas stream and collected in a sulfur storage chamber (not shown) until manually drained through a seal pot (not shown) and weighed to establish the sulfur production rate.

The process gas stream 16 is then passed through a process heater 17 where the temperature of the gas is heated to a range of about 700°F to about 1000°F.

The high temperature gas stream 16 is then passed through one of two reduced-sulfur selective absorber beds 22. The reaction taking place within the absorber bed 22 can be represented as follows:

inerts + metal oxide + $H_2S$ → $H_2O$ + metal sulfide + inerts

This exothermic reaction removes substantially all of the reduced sulfur compounds remaining in the gas stream. The gas stream 24 exiting the absorber bed 22 is then vented to the atmosphere 28.

The two absorber beds 22 and 23 operate in tandem. The first absorber bed 22 is absorbing reduced sulfur compounds, while the second absorber bed 23 is undergoing regeneration. The regeneration process involves the introduction of an oxygen containing gas 25 into a hot bed 23 of reduced absorbent material. The exothermic reaction which ensues can be described as follows:

inerts + metal sulfide + 1.5 $O_2$ → metal oxide + $SO_2$ + inerts

The gas stream 39 containing $SO_2$ exits the regenerating absorber bed 23 and is routed 4 to the first catalytic conversion zone 7 at the front of the process. There the $SO_2$ is reacted with $H_2S$ to produce sulfur, steam, and an effluent gas stream as described above.

The temperature in the absorber bed 23 during regeneration ranges from about 150°F to about 1700°F. The gas hourly space velocity during the regeneration ranges from about 300 to about 600, with an average gas hourly space velocity of about 480.

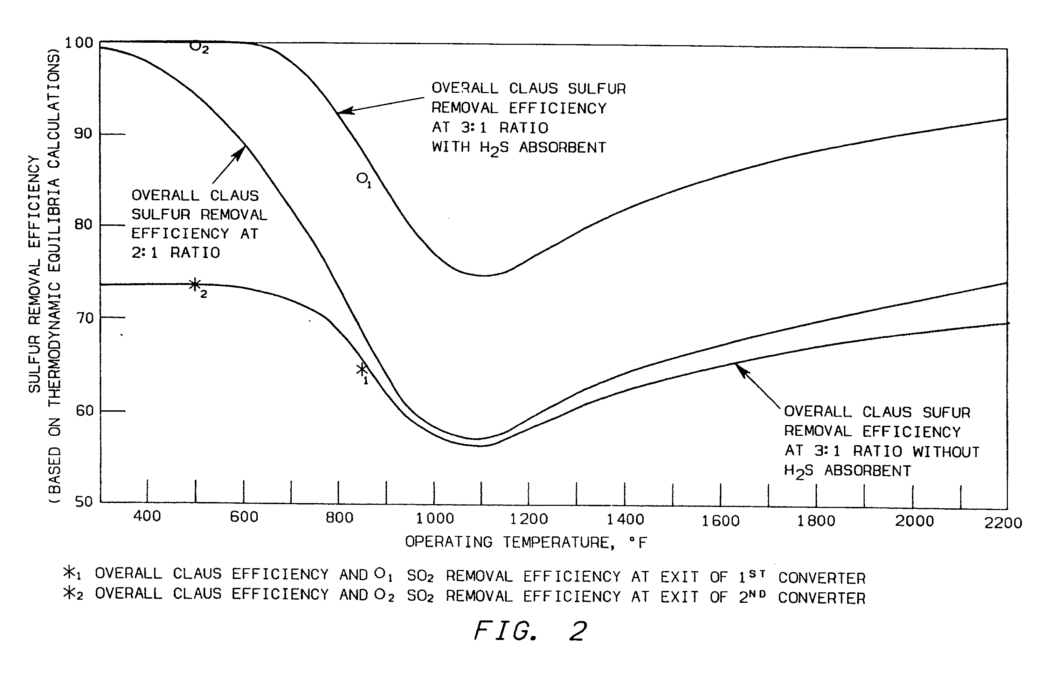

The calculated data for an experimental run wherein the initial molar ratio of $H_2S$ to $SO_2$ is maintained at about 3 to 1 is shown in Table 1, with the results of the data being plotted in Figure 2. The formulas used to calculate these results are as follows:

$$\text{Overall Claus Efficiency} = \frac{(H_2S + SO_2)\ in\ -\ (H_2S + S_2)\ out}{(H_2S + SO_2)\ in} \times 100$$

$$\text{For Converter 1:} \quad \frac{(10.0 + 3.4) - (4.34 + 0.48)}{13.4} \times 100 = 64\%$$

6

For Converter 1 and 2: $\dfrac{(10.0 + 3.4) - (3.45 + 0.034)}{13.4}$ x 100 = 74%

$$SO_2 \text{ Removal Efficiency} = \dfrac{(SO_2) \text{ in} - (SO_2) \text{ out}}{(SO_2) \text{ in}} \text{ x } 100$$

For Converter 1: $\dfrac{3.4 - 0.48}{3.4}$ x 100 = 86%

For Converter 1 and 2: $\dfrac{3.4 - 0.034}{3.4}$ x 100 = 99%

A review of the results set forth in Figure 2 discloses that the $SO_2$ Removal Efficiency corresponds to the overall combined sulfur removal efficiency of the Sulfur Recovery Unit and the absorber beds. Additionally, the curves plotted in Figure 2 demonstrate the improved sulfur removal efficiency obtained by the process of the present invention versus the typical stochiometric Claus reaction.

The reference curves contained in Figure 2 were plotted from a NASA Equilibrium program, which is based upon equilibrium data taken from the JANAF Tables, National Bureau of Standards, Commerce Department, 1971, Report No. 16955.

Table 1

| | Acid Gas 1 | Regen. Gas 4 | First Reactor Feed 1 and 4 | First Reactor Product 10 | Second Reactor Feed 11 | Second Reactor Product 15 | Feed to Absorber 16 | Vent Gas 28 | Regen. Air to Absorber 3 |
|---|---|---|---|---|---|---|---|---|---|
| $H_2S$ | 10.0 | -- | 10.0 | -- | 4.34 | -- | 3.446 | -- | -- |
| $SO_2$ | -- | 3.4 | 3.4 | -- | 0.48 | -- | 0.034 | 0.034 | -- |
| $CO_2$ | 85.0 | -- | 85.0 | -- | 85.00 | -- | 85.00 | 85.00 | -- |
| $O_2$ | -- | -- | -- | -- | -- | -- | -- | -- | 5.17 |
| $N_2$ | -- | 19.5 | 19.5 | -- | 19.50 | -- | 19.50 | 19.5 | 19.5 |
| $H_2O$ | 5.0 | -- | -- | -- | 10.66 | -- | 11.55 | 15.0 | -- |
| S | -- | -- | -- | 8.6 | -- | 1.32 | -- | -- | -- |
| Total | 100.0 | 22.9 | 117.9 | 8.6 | 119.98 | 1.32 | 119.53 | 119.5 | 24.67 |

EP 0 435 299 A1

While this invention has been described in detail for the purpose of illustration, it is not to be construed as limited thereby but is intended to cover all reasonable variations and modifications that are possible by those skilled in the art within the scope of the described invention and the appended claims.

**Claims**

1. A process for recovering elemental sulfur from a gas containing $H_2S$ characterized by
   (a) introducing said gas and an amount of $SO_2$ into a sulfur recovery unit to insure an average initial molar ratio of $H_2S$ to $SO_2$ within said sulfur recovery unit of about 3:1, and
   (b) Reacting said gas with said $SO_2$ in said sulfur recovery unit to produce sulfur and an effluent gas stream comprising $H_2S$, $SO_2$ and steam, wherein the molar ratio of $H_2S$ to $SO_2$ in said effluent gas stream is in excess of about 20:1.

2. The process of claim 1 wherein said molar ratio of $H_2S$ to $SO_2$ in said effluent gas stream is in excess of about 50:1.

3. The process of claim 1 or 2 wherein said reaction comprises a reaction temperature within the range of 149 to 649° C, pressure within the range of 0 to 207 kPa gauge, and a gas hourly space volume (GHSV) within the range of 200 to 10,000.

4. The process of claim 3 wherein said temperature is within the range of 204 to 482° C, said pressure is within the range of 14 to 104 kPa gauge, and said GHSV is within the range of 750 to 4,000.

5. The process of any of the preceding claims further comprising
   (c) contacting said effluent gas stream from (b) with a regenerable, reduced-sulfur absorbent to remove remaining $H_2S$ from said effluent gas stream, thereby producing a tail gas comprising less than about 100 ppm of reduced sulfur compounds and less than about 2000 ppm sulfur dioxide.

6. The process of claim 5 wherein said regenerable, reduced-sulfur absorbent comprises zinc oxide.

7. The process of claim 6 wherein said regenerable, reduced-sulfur absorbent further comprises a support material selected from alumina, silica, titania, zirconia, and mixtures thereof.

8. The process of claim 7 wherein said regenerable, reduced-sulfur absorbent further comprises at least one promoter selected from nickel, cobalt, iron, copper and molybdenum, preferably nickel.

9. The process of any of claims 5-8 further comprising
   (d) periodically interrupting the contact of said effluent gas stream with said regenerable, reduced-sulfur absorbent, and
   (e) regenerating said regenerable, reduced-sulfur absorbent, after the contact with said effluent gas stream has been interrupted, with an oxygen-containing gas while producing an $SO_2$-containing off-gas.

10. The process of claim 9 further comprising
    (f) recycling said $SO_2$-containing off-gas to said sulfur recovery unit.

11. The process of claim 9 wherein said oxygen-containing gas is air.

12. The process of claim 9 wherein said regeneration comprises a temperature within the range of 38 to 927° C, a pressure within the range of 0 to 690 kPa gauge, and a GHSV within the range of 100 to 1,000.

13. The process of claim 12 wherein said temperature is within the range of 121 to 816° C, said pressure is within the range of 0 to 173 kPa gauge, and said GHSV is within the range of 200 to 800.

14. The process of any of the preceding claims wherein the concentration of said $H_2S$ in said $H_2S$-containing gas is less than about 25 mol %.

9

FIG. 1

*1 OVERALL CLAUS EFFICIENCY AND $O_1$ $SO_2$ REMOVAL EFFICIENCY AT EXIT OF $1^{ST}$ CONVERTER
*2 OVERALL CLAUS EFFICIENCY AND $O_2$ $SO_2$ REMOVAL EFFICIENCY AT EXIT OF $2^{ND}$ CONVERTER

*FIG. 2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 159 730 (SHELL INT RES)<br>* the whole document * | 1-14 | C 01 B 17/04 |
| X | EP-A-0 242 006 (VEG-GASINSTITUUT)<br>* page 18, lines 15-19; page 21, line 21- page 22, line 11; claim 1-4; figures 1, 3c * | 1-14 | |
| A | CHEMICAL ABSTRACTS, vol. 105, no. 16, October 1986 Columbus, Ohio, USA M.H. Lee et al.: "ELSE tail gas clean-up process." page 145; ref. no. 136368 V<br>* abstract * | 5-14 | |
| A | US-A-4 871 521 (PENDERGRAFT) | | |
| A | EP-A-0 256 741 (AMOCO CORP) | | |
| A | US-A-4 797 268 (MCGOVERN) | | |

TECHNICAL FIELDS SEARCHED (Int. Cl.5)

C 01 B 17/00

The present search report has been drawn up for all claims

| Place of search | Date of completion of search | Examiner |
|---|---|---|
| The Hague | 12 March 91 | ZALM W.E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document